# EUROPÄISCHE PATENTSCHRIFT

(11) **EP 0 542 956 B1**
(45) Veröffentlichungstag und Bekanntmachung des Hinweises auf die Patenterteilung: **07.12.1994**
(21) Anmeldenummer: 92910898.3
(22) Anmeldetag: 05.06.1992
(51) Int. Cl.: G01F 23/26

(54) **VORRICHTUNG ZUR ELEKTRISCH ISOLIERTEN BEFESTIGUNG EINER METALLISCHEN SONDENELEKTRODE IN DER ÖFFNUNG EINES GEHÄUSES**
DEVICE FOR SECURING IN AN ELECTRICALLY INSULATED MANNER A METALLIC PROBE ELECTRODE IN THE OPENING OF A HOUSING
DISPOSITIF DE FIXATION DE L'ELECTRODE METALLIQUE D'UNE SONDE DANS L'OUVERTURE D'UN BOITIER DE FA ON ELECTRIQUEMENT ISOLEE

(30) Priorität: 07.06.1991 DE 4118715
(43) Veröffentlichungstag der Anmeldung: 26.05.1993
(73) Patentinhaber: Endress u. Hauser GmbH u. Co., D-79689 Maulburg (DE)
(72) Erfinder: LANG, Hugo, CH-4148 Pfeffingen (CH); ALZNAUER, Miroslaw, D-7861 Wies (DE)
(86) Internationale Anmeldenummer: DE9200462
(87) Internationale Veröffentlichungsnummer: WO9221943

(56) Entgegenhaltungen:
- EP-A- 0 101 580
- FR-A- 2 405 469
- GB-A- 2 064 128

## Beschreibung

Die Erfindung betrifft eine Vorrichtung zur elektrisch isolierten und druckdichten Befestigung einer metallischen Sondenelektrode in der Öffnung eines Gehäuses, vorzugsweise in der Öffnung eines Gehäuses einer Meßsonde zur Messung des Füllstandes in einem Behälter oder auch der Pegelhöhe in einem Gerinne. Um den Inhalt, d.h. die Höhe des Füllgutes in einem Behälter oder die Pegelhöhe in einem Gerinne zu erfassen, werden häufig kapazitive oder konduktive Meßsonden eingesetzt. Solche kapazitiven Sonden eignen sich für Füllgüter, deren Dielektrizitätskonstante von derjenigen der Luft verschieden ist. Dabei stellt die Elektrode der Meßsonde die eine Elektrode, die metallische Behälterwand des Behälters, dessen Füllhöhe gemessen werden soll, die zweite Elektrode und das Füllgut das Dielektrikum eines Meßkondensators dar.

Je nach Füllstand ist dabei die Meßsonde mehr oder weniger von dem Füllgut überdeckt. In Abhängigkeit von der Überdeckung ändert sich die Kapazität des Kondensators. Mit einer, häufig am Meßort im Innern des Sondenkopfgehäuses angeordneten elektronischen Schaltung wird diese Kapazitätsänderung festgestellt. Dies wird vorteilhaft dadurch bewirkt, daß an die Meßelektroden des Meßkondensators eine Wechselspannung angelegt und der über den Meßkondensator fließende kapazitive Wechselstrom gemessen, in ein Messignal umgewandelt und zu einer Schaltwarte übertragen wird, welche sich in den meisten Fällen entfernt von der Meßsonde befindet. In der Schaltwarte zeigen dann Anzeigegeräte den vorhandenen Füllstand an oder es werden Schaltelemente betätigt, welche über Aktoren steuernd in den Ablauf eines Prozesses eingreifen.

Durch dem Fachmann bereits bekannte geeignete Maßnahmen kann erreicht werden, daß die elektrische Feldverteilung des Meßkondensators über die ganze Länge der Meßsonde gleich bleibt, so daß die Kapazitätsänderung direkt der Füllstandsänderung proportional ist.

Sehr oft herrschen aber in den Behältern aufgrund des zu messenden Füllgutes Bedingungen, welche die Messung beeinflussen oder die Meßsonde selbst zerstören können. So können z.B. erhöhte Temperatur, hoher Druck oder aggressive Meßmedien vorhanden sein. Dadurch kann es vorkommen, daß thermische, mechanische oder chemische Einflüsse die Kapazität ändern, sich auf der Sonde Kondensat niederschlägt oder die Kapazität der Sonde durch eine Ansatzbildung von Füllgut im Befestigungsbereich, d.h. in der Nähe der Durchführung der Sonde durch die Behälterwand, vergrößert wird. So setzt sich die Gesamtkapazität solcher Meßsonden aus der Sondenkapazität, d.h. der Kapazität entlang der eigentlichen Meßsonde und der Kapazität im Befestigungsbereich, d.h. in der Nähe der Durchführung durch die Behälterwand zusammen. Um diese Einflüsse, welche eine Verfälschung des Meßergebnisses bewirken können zu beheben, ist es bekannt und üblich, zwischen der Behälterwand und der Meßelektrode eine metallische Schutzelektrode (Guard Elektrode) anzuordnen. Deren Aufgabe ist es, den Feldverlauf des Meßkondensators so zu beeinflussen, daß diese negativen Einflüsse nicht das Meßsignal verfälschen können. Da zu den vorhandenen negativen Einflüssen auch sehr oft ein erhöhter Druck gehört, ist es zusätzlich erforderlich, das Innere des Sondenkopfgehäuses so gegenüber dem Behälterinnenraum abzudichten, daß kein Druck entweichen und damit kein aggressives Medium mit der, im Innenraum des Sondenkopfgehäuses angeordneten elektrischen Schaltung in Verbindung treten und diese zerstören kann. Selbstverständlich muß jedoch die Abdichtung so geschehen, daß die als eine Elektrode des Meßkondensators wirkende Meßelektrode in elektrischer Verbindung mit der elektronischen Schaltung bleibt. Dies ist auch für die metallische Schutzelektrode notwendig.

Aus der deutschen Offenlegungsschrift 27 44 864 ist eine Vorrichtung zur Befestigung einer Sonde in der Öffnung eines Behälters bekannt. Hier ist zur Erzielung einer druckdichten Befestigung der Sondenelektrode in der, sich zur Behälterseite hin konisch erweiternden Öffnung und zur isolierten Durchführung des Sondenanschlusses durch diese Öffnung ein mit einer konischen Außenfläche versehenes und mit der Sonde verbundenes Zwischenstück angeordnet, das mittels einer Schraubverbindung, die an der dem Behälterinnenraum abgewandten Seite angebracht ist, die konischen Flächen unter Einfügung einer Feder gegeneinander preßt. Die in der deutschen Offenlegungsschrift 27 44 864 vorgeschlagene Vorrichtung setzt das Nichtvorhandensein einer metallischen Schutzelektrode voraus.

Demgegenüber hat die Erfindung die Aufgabe, eine Vorrichtung zur elektrisch isolierten und druckdichten Befestigung einer metallischen Sondenelektrode in der Öffnung eines Gehäuses vorzuschlagen, bei welcher sowohl eine Sondenelektrode als auch eine metallische Schutzelektrode in der Öffnung eines Gehäuses mittels einer einzigen Schraubverbindung befestigt werden kann. Die Erfindung gewährleistet eine sichere Druckdichtheit beider Elektroden, die elektrische Isolierung gegeneinander, sowie gegenüber der metallischen Behälterwand und die isolierte elektrische Verbindung der Elektrodenteile mit der, im Inneren des Sondenkopfgehäuses angeordneten elektronischen Schaltung.

Gelöst wird diese Aufgabe, durch die in den Patentansprüchen gekennzeichneten Merkmale.

Weitere Merkmale und Vorteile der Erfindung ergeben sich aus der folgenden Beschreibung von Ausführungsbeispielen anhand der Zeichnungen.

In den Zeichnungen zeigen:
- **Figur 1**: eine axiale Schnittansicht eines ersten Ausführungsbeispieles der Erfindung
- **Figur 2**: eine axiale Schnittansicht der Sondenelektrode
- **Figur 3**: eine axiale Schnittansicht der Schutzelektrode
- **Figur 4**: eine axiale Schnittansicht des Einschraubstückes
- **Figur 5**: eine axiale Schnittansicht und eine Untersicht der Isolationsmutter
- **Figur 6**: eine weitere Ausführungsform der Erfindung

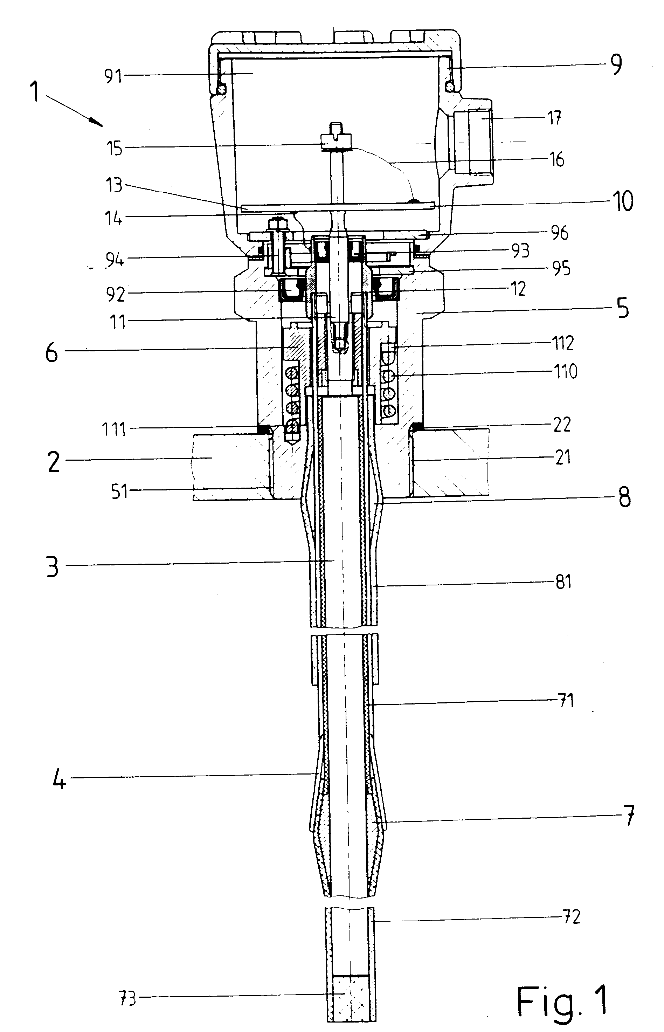

In Figur 1 ist unter 1 eine kapazitive Meßsonde zur Messung des Füllstandes in einem Behälter oder aber der Pegelhöhe in einem Gerinne dargestellt. Die Meßsonde 1 stellt die eine Elektrode eines Kondensators dar, mit dessen Hilfe die Höhe des Füllstandes ermittelt werden soll. Die Meßsonde 1 ist dazu in der metallischen Wandung 2 eines Behälters befestigt, welche als die andere Elektrode des Meßkondensators wirkt. Zur Befestigung der Meßsonde 1 durchdringt eine, mit einem Innengewinde versehene Bohrung 21 die Behälterwand 2 und die Meßsonde 1 weist ein Außengewinde 51 auf, mit welchem die Sonde in die Behälterwand 2 eingeschraubt ist. Zur Abdichtung des Behälterinnenraumes stützt sich die Meßsonde 1 dabei an den Flächen eines Dichtringes 22 ab.

Die Meßsonde 1 setzt sich aus der eigentlichen Stabelektrode 3, der Schutzelektrode 4, dem Einschraubstück 5, der Isolationsmutter 6, den dichtenden Kegelverbindungen 7, 8, dem Sondenkopfgehäuse 9 sowie der elektronischen Schaltung 10 mit den elektrischen Verbindungs- und Anschlußteilen zusammen.

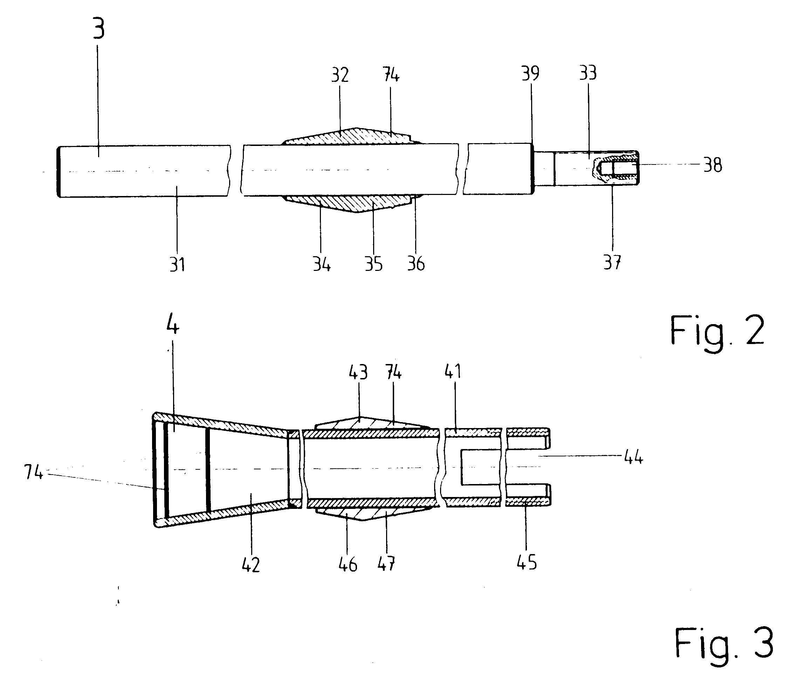

Die in Figur 2 in Einzelheiten dargestellte Stabelektrode 3 stellt den aktiven Teil der Meßsonde 1 dar. Sie besteht aus dem Sondenstab 31, dem Dichtkegel 32 und dem Anschluß- und Befestigungsbolzen 33. Der Sondenstab 31 ist aus Metall, vorzugsweise einem schweißbaren Stahl, hergestellt. Der Dichtkegel 32 hat die Form einer Buchse mit der Form zweier sich von der Mitte aus, beiderseits verjüngend erstreckender Kegelstümpfe. Er kann in einem spanabhebenden Verfahren ebenfalls aus einem schweißbaren Stahl hergestellt sein. Die beiden Kegelstümpfe bilden je eine Kegelfläche 34, 35. Während die Kegelfläche 34, wie wir später noch sehen werden, das Aufziehen einer Isolationsschicht erleichtert, stellt die Kegelfläche 35 den ersten Teil der erfindungsgemäßen Dichtkegelverbindung der Meßsonde 1 dar. Der Aufnahme einer Isolationsschicht dient auch der Absatz 36, welcher an dem, dem Anschluß und Befestigungsbolzen 33 zugewandten Ende des Dichtkegels 35 den Sondenstab 31 umläuft. Die Position des Dichtkegels 32 auf dem Stab 31 ist so gewählt, daß im zusammengebauten Zustand der Meßsonde 1, die Kegelfläche 35 mit der Kegelfläche 42 der Schutzelektrode 4 zusammenwirkt. An dem, der Behälterwand zugewandten Ende, erstreckt sich an dem Sondenstab 31 ein kurzer zylindrischer Abschnitt kleineren Durchmessers. Dieser bildet den Anschluß- und Befestigungsbolzen 33. Dazu ist der Anschluß- und Befestigungsbolzen 33 an seinem Ende mit dem Außengewinde 37 versehen. Außerdem ist an der Stirnseite koaxial zur Symetrieachse eine Gewindebohrung 38 eingebracht. Durch den kleineren Durchmesser des Anschluß- und Befestigungsbolzens 33 ist an dem Sondenstab 31 eine Schulter 39 ausgebildet.

Figur 3 zeigt eine axiale Schnittansicht der Schutzelektrode (Guard Elektrode) 4. Die Schutzelektrode 4 setzt sich aus dem rohrförmigen Teil 41 und den Dichtkegeln 42, 43 zusammen. Der Dichtkegel 42 erstreckt sich mit zunehmendem Durchmesser in Richtung auf den Behälterinnenraum. Die Länge und die Neigung der Kegelfläche des Dichtkegels 42 sind so gewählt, daß die Innenfläche des Dichtkegels 42 der Kegelfläche 35 des Dichtke-gels 32 entspricht. Der rohrförmige Teil 41 und der Dichtkegel 42 sind aus Metall, vorteilhaft aus einem schweißfähigen Stahl, hergestellt und mittels einer Schweißverbindung miteinander verbunden. Selbstverständlich ist auch jede andere, dem Fachmann geläufige Herstellungsart möglich.

An dem, dem Dichtkegel 42 abgewandten Ende ist an der Schutzelektrode 4 ein kurzer zylindrischer Abschnitt ausgebildet, welcher von zwei, sich geometral gegenüberliegenden, rechtekkigen Aussparungen 44 durchbrochen wird. Die Aussparungen 44 erstrecken sich von dem, dem Dichtkegel 42 abgewandten Ende der Schutzelektrode 4 ein Stück in axialer Richtung. Der, nicht von den Aussparungen 44 durchbrochene Restteil der Umfangswand des Rohres 41 bildet zwei, in etwa halbkreisförmige Segmente, auf welche ein Außengewinde 45 aufgebracht ist. Der auf der Schutelektrode 4 angeordnete Dichtkegel 43 ist von größerem Durchmesser als der Dichtkegel 32 der Stabelektrode 3, entspricht aber in etwa derselben Form. D.h. der Dichtkegel 43 gliedert sich ebenfalls in zwei, sich zu den jeweiligen Enden hin verjüngende kegelige Abschnitte, von denen die Kegelfläche 46 zur Führung der Isolierschicht dient und die Kegelfläche 47 als weitere Dichtkegelfläche ausgebildet ist. Die Innenkegelfläche des Dichtkegels 42 und die Außenkegelfläche des Dichtkegels 35 bilden zwei weitere Elemente der erfindungsgemäßen Dichtkegelverbindung.

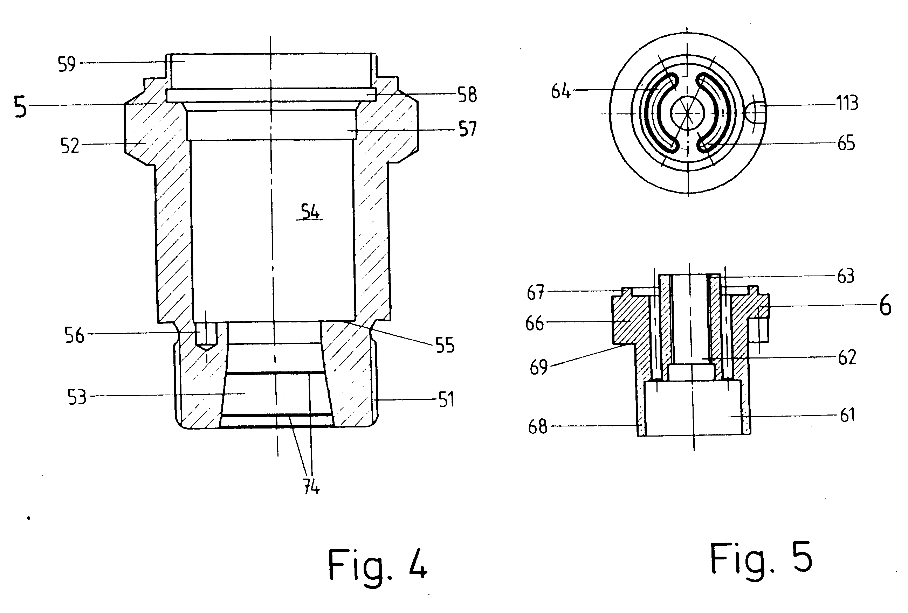

Figur 4 zeigt den axialen Schnitt durch das Einschraubstück 5. Das Einschraubstück 5 dient der Aufgabe, die Meßsonde 1 mittels des Außengewindes 51 in der Behälterwand 2 zu befestigen, einen weiteren Teil der erfindungsgemäßen Kegelverbindung zu bilden sowie jene Teile der Verbindung, gegen deren Wirkung sich die Kegelverbindungen abstützen, zu umschließen. Zur Befestigung in der Behälterwand 2 ist das Einschraubstück 5 mit einem genormten Sechskant 52 versehen. Der Sechskant 52 dient dem Eingriff eines Schraubenschlüssels mit dessen Hilfe die Meßsonde 1 in die Behälterwand 2 eingeschraubt wird. Entlang seiner Symetrieachse ist das Einschraubstück 5 von einer kreisrunden durchgehenden Öffnung durchdrungen.

Diese setzt sich aus einzelnen axialen Abschnitten unterschiedlichen Durchmessers zusammen. Koaxial zu dem Gewinde 51 befindet sich ein erster Abschnitt der Öffnung in Form eines Kegelstumpfes. Dessen Länge und Neigung ist wiederum so gewählt, daß die innere Kegelfläche 53 einen Dichtkegel bildet, der mit der Kegelfläche 47 der Schutzelektrode 4 zusammenwirkt und den weiteren Teil der erfindungsgemäßen Dichtkegelverbindung bildet.

Im Anschluss an die Kegelfläche 53 befindet sich ein Abschnitt größeren Durchmessers, welcher den Innenraum 54 bildet. Der Innenraum 54 dient der Aufnahme jener Befestigungsteile, die zur erfindunggemäßen elektrisch isolierten Befestigung einer metallischen Sondenelektrode in der Öffnung eines Gehäuses Anwendung finden. Zwischen der Kegelfläche 53 und dem Innenraum 54 befindet sich ein kurzes Stück zylindrischen Durchmessers. Dessen Länge kann fertigungsbedingt unterschiedlich sein. Durch die unterschiedlichen Durchmesser von Kegelfläche 53 und Innenraum 54 ist eine kreisringförmige Schulter 55 ausgebildet, welche sich von der Kegelfläche 53 radial erstreckt und an welcher sich dann im zusammengebauten Zustand eine Feder abstützt. Die Schulter 55 weist eine kurze zylindrische Bohrung 56 auf, die zur Aufnahme des Arretierzapfens 111 der Druckfeder 110 bestimmt ist.

Auf der, der Kegelfläche 53 abgewandten Seite schließt sich an den Innenraum 54 eine zylindrische Öffnung 57 größeren Durch messers an. Diese ist zur Aufnahme eines Wellendichtringes bestimmt. Die sich anschließenden kurzen zylindrischen Abschnitte 58, 59 sind zur Aufnahme der Befestigungselemente zur mechanischen Verbindung des Einschraubstückes 5 mit dem Gehäuse 9 vorgesehen. Dazu erstreckt sich die, ein Stück die Wand durchdringende Nut 58 radial über den Durchmesser des zylindrischen Abschnittes 59 hinaus und bildet eine Schulter an der sich im zusammengebauten Zustand der Meßsonde 1 eine Einlegescheibe abstützt. Außerdem dienen die Öffnungen 54,57, 58 dazu, die zwischen der Stabelektrode 3, der Schutzelektrode 4 und der elektronischen Schaltung 10 notwendigen elektrischen Verbindungen aufzunehmen. Auf ihre Funktion soll später genauer eingegangen werden.

Figur 5 zeigt in axialem Schnitt und Untersicht die Isolationsmutter 6. Die Isolationsmutter 6 hat im Zusammenwirken mit dem, an der Stabelektrode 3 angebrachten Außengewinde 37 die erste Aufgabe, die erfindungsgemäße Dichtkegelverbindung mechanisch lösbar zu befestigen. Die zweite Aufgabe besteht darin, die Stabelektrode 3 und die metallische Schutzelektrode 4 elektrisch gegenüber dem Einschraubstück 5 zu isolieren. Diese Aufgaben werden dadurch erreicht, daß die Isolationsmutter 6 aus einem isolierenden Kunststoff, vorzugsweise aus einem Polyphenylensulfid, hergestellt ist und aus zwei funktional bestimmten Bereichen gebildet ist. Der erste Bereich ist von zylindrischer Form und umschließt ein Befestigungselement sowie Isolationselemente, während der zweite, flanschförmige Bereich zur isolierten Abstützung und Umschließung metallischer Leiter dient. Die Isolationsmutter 6 kann in einem spanabhendenden Verfahren oder auch als Spritzteil hergestellt sein. Die Isolationsmutter 6 ist axial ein Stück von der topfförmigen Öffnung 61 durchdrungen. Im zusammengebauten Zustand nimmt die Stabsonde 3 und die Schutzsonde 4 eine Lage ein, bei welcher die, dem Behälter abgewandten Enden beider Sonden in die Öffnung 61 ragen und topfförmig von einer Isolierung umgeben sind. Anschließend an die Öffnung 61 erstreckt sich eine Bohrung 62 und durchdringt die Isolationsmutter 6 vollkommen.

Die Innenfläche der Bohrung 62 ist mit einem Innengewinde 63 versehen. Das Innengewinde 63 nimmt beim Zusammenfügen der Meßsonde 1 das Außengewinde 37 der Stabelektrode 3 auf. Ein kurzer zylindrischer Abschnitt größeren Durchmessers zwischen Öffnung 61 und Innengewinde 63 erleichtern das Eindrehen des Außengewindes 37.

Die Bohrung 62 ist von zwei in etwa halbkreisförmigen Nuten 64, 65 umgeben. Die Nuten 64, 65 durchbrechen die Isolatiosmutter 6 von der Öffnung 61 aus ebenfalls vollkommen. Entlang einem Lochkreisumfang stellen die beiden Nuten 64, 65 zwei sich symmetrisch gegenüberliegende Segmente eines Kreisumfanges dar, bei welchem der Lochkreisdurchmesser der neutralen Faser des Rohrwandungs- durchmessers des rohrförmigen Abschnittes 41 der Schutzelektrode 4 entspricht. Im zusammengebauten Zustand werden die beiden, nicht von der Aussparung 43 durchdrungenen, d.h. verbleibenden halbkreisförmigen Stege des rohrförmigen Abschnittes der Schutzelektrode 4 so durch die Nuten 64, 65 geführt, daß das Gewinde 45 ein ganzes Stück aus der Isolationsmuttter 6 herausragt. Gleichzeitig werden dabei die halbkreisförmigen Stege von allen anderen metallischen, d.h. elektrisch leitenden Teilen elektrisch isoliert. Der flanschförmige Bereich 66 größeren Durchmessers stützt sich mit seiner Mantelfläche an der Wand der Öffnung 54 des Einschraubstückes 5 ab und verhindert dadurch die Berührung von elektrisch leitenden Teilen. Der Isolierung dient auch der Bund 67, der sich von der Stirnfläche des Flansches 66 ein Stück in Richtung Sondenkopfgehäuse 9 erstreckt.

Der zylindrische Bereich der Isolationsmutter 6, welcher nicht durch den Flansch 66 gebildet ist, nimmt die Form einer Buchse ein, deren äußere Mantelfläche 68 bildet im Zusammenwirken mit der Innenwand der Öffnung 54 des Einschraubstückes 5 der Führung der Druckfeder 110. Diese stützt sich im eingebauten Zustand an der ringförmigen Auflagefläche 69 ab, welche sich radial erstreckt und auf der, dem Behälterinnenraum zugewandten Stirnfläche des Flansches 66 gebildet ist. Die Auflagefläche 69 ist von einer Öffnung 113 durchbrochen, in welche im eingebauten Zustand der zweite Arretierungszapfen 112 der Druckfeder 110 eingreift.

Die bisher beschriebenen Einzelteile der Meßsonde 1 werden in der folgenden Weise zusammengebaut.

Wie aus Figur 1 ersichtlich ist die Mantelfläche der Stabelektrode 3 zur Verhinderung von Kriechströmen mit einer Isolierschicht umgeben. Die Isolierschicht kann aus einem handelsüblichen Isolierrohr oder Isolierschlauch, vorzugsweise aus einem Polytetrafluoräthylen hergestellt sein. Ein erster Abschnitt der Isolierung 71 wird von der Seite des Befestigungsbolzens 33 über den Stab 31 geschoben, bis das, dem Behälterinneren zugewandte Ende der Isolierung 71 an dem Absatz 36 des Dichtkegels 32 ansteht. Das andere Ende der Isolierung 71 wird dann mit der Schulter 39 zusammen fallen. Ein zweiter Teil 72 der Isolierung wird anschließend von der anderen Seite über den Stab 31 geschoben, bis sein Ende ein kleines Stück über den Dichtkegel 32 hinausragt und die Isolierung 71 ein kurzes Stück überlappt. Die Kegelfläche 34 erleichtert dabei das Aufbringen der Isolierschicht 72. Die Isolierschicht 72 ragt in dieser Lage noch ein kleines Stück über das Ende des Stabes 31 hinaus. Ein in diesen Überstand eingesetzter Stopfen 73 gleichen Werkstoffes verschließt dann die Stirnseite des Stabes 31 isolierend vollkommen.

In einem weiteren Arbeitsgang wird auch die Schutzelektrode 4 mit einer Isolierschicht umgeben. Dies geschieht so, daß ebenfalls ein Isolierrohr oder -schlauch 81 über den zylindrischen Abschnitt 41 so aufgeschoben wird, daß der Dichtkegel 43 überdeckt ist und das, dem Behälterinnenraum zugewandte Ende der Isolierung 81 eine Lage zwischen den beiden Dichtkegeln 7 und 8 so einnimmt, daß ein vorher berechnetes Teilstück der metallischen Schutzelektrode 4 von jeglicher Isolierung frei bleibt. Das andere Ende der Isolierung 81 reicht bis unmittelbar an die Aussparungen 44. Die Kegelfläche 46 erleichtert auch hier das Aufbringen der Isolierschicht 81. Nun wird die Schutzelektrode 4 über die Stabelektrode 3 geführt, bis die innere Kegelfläche des Dichtkegels 42 der Schutzelektrode 4 eine Lage gegenüber der Kegelfläche des Dichtkegels 35 der Stabelektrode 3 einnimmt. Ein elektrisch leitender metallischer Verbindungsstab 11 wird in das Innengewinde 38 eingedreht und so mit der Stabelektrode 3 verbunden. Danach wird die entstandene Baueinheit in die kegelige Öffnung des Einschraubstückes 5 geführt, bis die Kegelfläche 47 der Schutzelektrode 4 eine Lage gegenüber der Kegelfläche 53 einnimmt. Dabei ragen beide Elektroden in den Innenraum 54 und der Verbindungsstab 11 durch das Einschraubstück 5 hindurch. Nun wird von der zylindrischen Öffnung 59 her die Druckfeder 110 so in den Innenraum 54 eingeführt, daß der Arretierungszapfen 111 in die Bohrung 56 einrastet. Nach erfolgter Einführung der Isolationsmutter 6 rastet der Arretierungszapfen 112 in der Öffnung 113 der Isolationsmutter 6 ein. Nun kann das Zusammenfügen der Kegelverbindung erfolgen. Durch das Eindrehen des Sondenstabes 3 in das Einschraubstück 5 wird bewirkt, daß die Isolationsmutter 6 gegen die torsionale Wirkung der Feder 110 in ihrer Lage gehalten wird und sich das Außengewinde 37 der Stabsonde 3 in das Innengewinde 63 der Isolationsmutter 6 einschraubt. Da sich dabei die Isolationsmutter 6 gegen die axiale Wirkung an der Feder 110 abstützt, ist die Bildung der Schraubverbindung zwischen der Stabsonde 3 und der Isolationsmutter 6 mit einer Veränderung der Längslage beider Sonden 3, 4 zueinander und gleichzeitig miteinander gegenüber dem Einschraubstück 5 verbunden. Da sich bei dieser Bewegung die Kegelfläche 35 der Stabelektrode 3 gegen die Kegelfläche 42 der Schutzelektrode 4 und gleichzeitig der Kegelfläche 47 der Schutzelektrode 4 gegen die Kegelfläche 53 des Einschraubstückes 5 abstützt, werden gleichzeitig beide Kegelverbindungen 7, 8 durch gegeneinander pressen gebildet und unter Einschluß der Isolationsschichten 72, 81 verschlossen. An den Flächen der Dichtkegel umlaufende nasenförmige Erhebungen 74 beeinflußen zusätzlich, die von dem Druck der Kegelflächen verursachte Fließbewegung der Isolationsschicht.

Kompletiert wird die Meßsonde 1 durch das Aufschrauben einer metallischen Gewindehülse 12 auf jenen Teil des Außengewindes 45 der Schutzelektrode 4, welcher die Isolationsmutter 6 durchdringend übersteht. Dabei nimmt das dem Behälterinnenraum zugewandte Ende der Gewindehülse 12 eine Lage innerhalb des Bundes 67 der Isolationsmutter 6 ein. Die metallische Gewindehülse 12 stellt die elektrische Verbindung zwischen der metallischen Schutzelektrode 4 und der elektronischen Schaltung 10 im Innenraum 91 des Gehäuses 9 dar.

Wellendichtringe 92, 93 verschließen den Innenraum 54 des Einschraubstückes 5 gegenüber dem Innenraum 91 des Gehäuses 9. Dazu ist der Wellendichtring 92 in der zylindrischen Öffnung 57 des Einschraubstückes 5 und der Wellendichtring 93 im Inneren der Gewindehülse 12 angeordnet. Bei den Wellendichtringen 92 und 93 kann es sich um handelsübliche Wellendichtringe handeln.

Zum mechanischen Verbinden des Einschraubstückes 5 mit dem Gehäuse 9 sind mehrere Schraubverbindungen 94, von denen nur eine gezeigt ist, nichtlösbar mit einer Einlegescheibe 95 verbunden. Die Einlegescheibe 95 ist im Inneren der Nut 58 des Gehäuses 5 angeordnet. Die auf einem Lochkreis angeordnete Schraubverbindungen 95 durchdringen den Boden 96 des Gehäuses 9. Zur Abdichtung gegenüber der Umwelt, sind zwischen Einschraubstück 5 und Gehäuse 9 Dichtringe vorgesehen.

Im Innenraum 91 des Gehäuses 9 ist eine Leiterplatte 13 angeordnet. Auf ihr sind nichtdargestellt elektronische Bauteile vorhanden, welche zusammen mit den ebenfalls nichtdargestellten Leiterbahnen die elektronische Schaltung 10 des Meßwertaufnehmers 1 bilden. Eine Leitung 14 stellt die elektrische Verbindung zwischen der metallischen Gewindehülse 12 und der Leiterplatte 13 her. Damit ist die metallische Schutzelektrode 4 elektrisch mit der Leiterplatte 13 und damit mit der elektronischen Schaltung 10 verbunden.

Weiter ist die Leiterplatte 13 von dem Verbindungsstab 11 durchdrungen. Die Leiterplatte 13 nimmt dabei auf dem Verbindungsstab 11 eine Lage ein, in der Verbindungsstab 11 ein Stück durch die Leiterplatte 13 hindurch ragt. Der Verbindungsstab 11 stellt die elektrische Verbindung zwischen der Stabelektrode 3 und der elektronischen Schaltung 10 dar. Dazu ist der Verbindungsstab 11 innerhalb der Gewindehülse 12 und dem Gehäuse 9 so angeordnet, daß er elektrisch isoliert von den anderen metallischen Teilen ist. An seinem, in den Innenraum 91 ragenden Ende, ist der Verbindungsstab 11 mit einer Schraubverbindung 15 versehen. Ein elektrischer Leiter 16 stellt nun die elektrische Verbindung zwischen der Stabelektrode 3 und der Leiterplatte 13 und damit zu der elektronischen Schaltung 10 her. Die Verbindung der elektronischen Schaltung 10 mit den häufig in einer Meßwarte entfernt vom Meßort angeordneten Auswerte- oder Schaltgeräten geschieht mittels einer nichtdargestellten Verbindungsleitung, die durch die Öffnung 17 des Gehäuses 9 geführt ist.

Aus Figur 1 ist nun klar ersichtlich, daß es gegenüber dem bisherigen Stand der Technik mit der erfindungsgemäßen Vorrichtung möglich ist, die Befestigung einer metallischen Sondenelektrode in der Öffnung eines Gehäuses so vorzunehmen, daß die metallische Stabelektrode wie auch die metallische Schutzelektrode mittels einer einzigen isolierenden Schraubverbindung elektrisch isoliert und druckdicht zu einander in der Öffnung eines Einschraubstückgehäuses befestigt sind.

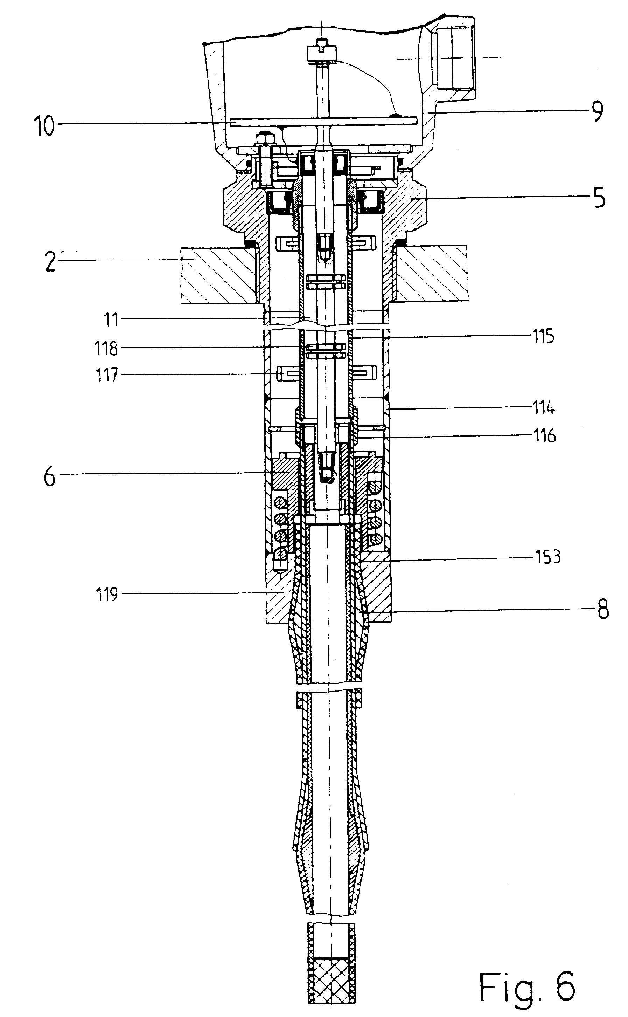

In Figur 6 ist ein weiteres Ausführungsbeispiel der erfindungsgemäßen Vorrichtung dargestellt. Dieses unterscheidet sich gegenüber der in Figur 1 dargestellten Ausführungsform lediglich dadurch, daß zwischen dem Einschraubstück 5 und der ersten kegeligen Dichtverbindung 8 ein metallisches Zwischenstück 114 angeordnet ist. Dieses hat zur Aufgabe, den aktiven Teil der Meßsonde 1 so anzuordnen, daß er weiter in den Behälterinnenraum ragt. Dabei stellt ein Metallrohr 115 die elektrische Verbindung zwischen der Schutzelektrode 4 und der elektronischen Schaltung 10 her. Das Metallrohr 115 ist dabei mittels einer Gewindemuffe 116 mechanisch wie elektrisch mit der Schutzelektrode 4 verbunden. Mehrere Abstandsringe 117 aus einem elektrisch isolierernden Werkstoff erstrecken sich radial von der Mantelfläche des Rohres 115 in den Zwischenraum zwischen dem Metallrohr 115 und dem Zwischenstück 114. Sie verhindern, daß das Metallrohr 115 in elektrischen Kontakt zu der Innenwand des Zwischenstückes 114 treten kann.

Die elektrische Verbindung der Stabelektrode 3 und der elektronischen Schaltung 10 ist durch einen verlängerten Verbindungsstab 11 hergestellt. Auf dessen Mantelfläche ebenfalls Abstandsringe 118 angeordnet sind, um die elektrische Isolierung gegenüber der Innenwand des Metallrohres 115 zu gewährleisten.

Bei diesem Ausführungsbeispiel ist die Kegelverbindung 8 nicht mittels des Einschraubstückes 5 hergestellt, sondern eine eigens dafür vorgesehene Konusaufnahme 119 übernimmt (außer der Befestigung der Meßsonde 1 in der Behälterwand 2) alle mit der Befestigung von Stabelektrode 3 und Schutzelektrode 4 zusammenhängenden Aufgaben.

Die Erfindung kann natürlich auch dann angewendet werden, wenn es gewollt oder notwendig ist, die metallische Schutzelektrode statt mit einer teilweisen, mit einer vollständigen Isolierung zu umschließen.

## Patentansprüche

1. Vorrichtung zur elektrisch isolierten und druckdichten Befestigung einer metallischen Sondenelektrode (3,4) in der Öffnung (53,153) eines Gehäuses (5), vorzugsweise in der sich nach der Behälterseite hin erweiternden Öffnung (53,153) eines Gehäuses (5) einer Meßsonde (1) zur Messung des Füllstandes in einem Behälter oder der Pegelhöhe in einem Gerinne, enthaltend die folgenden Merkmale:
a) die Vorrichtung ist aus einer metallischen Stabelektrode (3), einer metallischen Schutzelektrode (4) und einem Gehäuse (5) gebildet;
b) an der Stabelektrode (3), der Schutzelektrode (4) und dem Gehäuse (5) sind kegelstumpfförmige Dichtflächen (35, 42, 47, 53) so angeordnet, daß sie zwischen den Kegelflächen der Stabelektrode (3) und der Schutzelektrode (4) sowie zwischen den Kegelflächen der Schutzelektrode (4) und dem Gehäuse (5) sich gegenüberliegende Dichtkegelverbindungen (7, 8) ausbilden;
c) die Stabelektrode (3) und die Schutzelektrode (4) sind zueinander isoliert (71, 72, 81) und die Dichtkegelverbindungen (7, 8) bildend von einer die Elektroden (3,4)
sowie die elektrischen Verbindungen (11, 12) der Elektroden isolierenden Mutter (6) gegen die Wirkung einer Druckfeder (110) im Inneren des Gehäuses (5) in ihrer Lage gehalten.

2. Vorrichtung nach Anspruch 1, **dadurch gekennzeichnet**, daß die Schutzelektrode (4), die Stabelektrode (3) unter Einschluß einer Isolierung (71, 72) koaxial umgreift.

3. Vorrichtung nach Anspruch 1, **dadurch gekennzeichnet**, daß die Kegelverbindungen (7, 8) die Stabelektrode (3) gegenüber der Schutzelektrode (4) und die Schutzelektrode (4) gegenüber dem Gehäuse (5) unter Einschluß der Isolierschicht (71, 72, 81) druckdicht verschließen.

4. Vorrichtung nach Anspruch 1, **dadurch gekennzeichnet**, daß die Stabelektrode (3) und die Isolationsmutter (6) die im Inneren des Gehäuses (5) angeordnete Schraubverbindung bilden.

5. Vorrichtung nach Anspruch 1, **dadurch gekennzeichnet**, daß das Gehäuse (5) ein Einschraubstück ist, mit dessen Hilfe die Meßsonde (1) in der, das Meßmedium umgebenden Wandung (2) befestigt ist.

6. Vorrichtung nach Anspruch 1, **dadurch gekennzeichnet**, daß die Stabelektrode (3) mit einem Dichtkegel (32) verbunden ist, der den Sondenstab (31) umläuft und von zwei, sich zu den Enden des Dichtkegels (32) hin verjüngenden Kegelstumpfflächen (43, 35) gebildet ist.

7. Vorrichtung nach Anspruch 6, **dadurch gekennzeichnet**, daß an dem Dichtkegel (32) ein Absatz (36) angeformt ist.

8. Vorrichtung nach Anspruch 6, **dadurch gekennzeichnet**, daß der Sondenstab (31) und der Dichtkegel (32) mittels eines Schweißverfahrens miteinander verbunden sind.

9. Vorrichtung nach Anspruch 4, **dadurch gekennzeichnet**, daß die Stabelektrode (3) an ihrem, dem Behälterinnenraum abgewandten Ende einen Anschluß- und Befestigungsbolzen geringeren Durchmessers (33) aufweist, auf welchem ein Außengewinde (37) aufgebracht ist.

10. Vorrichtung nach Anspruch 1, **dadurch gekennzeichnet**, daß an der Schutzelektrode (4) Dichtkegel (42, 43) ausgebildet sind.

11. Vorrichtung nach Anspruch 10, **dadurch gekennzeichnet**, daß sich der Dichtkegel (42) erweiternd in Richtung auf den Behälterinnenraum erstreckt.

12. Vorrichtung nach Anspruch 10, **dadurch gekennzeichnet**, daß der Dichtkegel (43) die Mantelfläche des rohrförmigen Teiles (41) umläuft und aus zwei, zu den Enden des Dichtkegels (43) hin verjüngenden kegelstumpfförmigen Flächen (46, 47) gebildet ist.

13. Vorrichtung nach Anspruch 1, **dadurch gekennzeichnet**, daß die Schutzelektrode (4) an seinem, dem Dichtkegel (42) abgewandten Ende von zwei sich geometral gegenüberliegenden Aussparungen (44) durchbrochen ist.

14. Vorrichtung nach Anspruch 13, **dadurch gekennzeichnet**, daß die, nicht von den Aussparungen (44) durchbrochenen Segmente halbkreisförmig und mit einem Außengewinde (45) versehen sind.

15. Vorrichtung nach Anspruch 1, **dadurch gekennzeichnet**, daß die Isolationsmutter (6) aus den zwei funktionell bestimmten Bereichen Befestigungsmutter (62, 63) und Isolationsflansch (66, 67) gebildet ist.

16. Vorrichtung nach Anspruch 15, **dadurch gekennzeichnet**, daß der Flansch (66) die elektrischen Leiter (11, 12) der Stabelektrode (3) und der Schutzelektrode (4) gegenüber dem Gehäuse (5) isolierend an der Wand des Innenraumes (54) abstützt.

17. Vorrichtung nach Anspruch 15, **dadurch gekennzeichnet**, daß die Isolationsmutter (6) ein axial angeordnetes Innengewinde (63) aufweist.

18. Vorrichtung nach Anspruch 15, **dadurch gekennzeichnet**, daß die Isolationsmutter (6) von Öffnungen (62, 64, 65) durchdrungen ist, durch welche die elektrische Verbindung der Stabelektrode (3) und der Schutzelektrode (4) mit der elektronischen Schaltung (10) elektrisch gegeneinander isoliert geführt sind.

19. Vorrichtung nach Anspruch 17, **dadurch gekennzeichnet**, daß die, von den dem Behälterinnenraum abgewandten Enden der Schutzelektrode (4) durchdrungenen Aussparungen (64, 65) der Isolationsmutter (6) halbkreisförmig ausgebildet sind.

20. Vorrichtung nach Anspruch 15, **dadurch gekennzeichnet**, daß die Isolationsmutter (6) aus einem elektrisch isolierenden Werkstoff hergestellt ist.

21. Vorrichtung nach Anspruch 1, **dadurch gekennzeichnet**, daß sich im Innenraum (54) des Gehäuses (5) eine Druckfeder (110) an der Schulter (55) des Gehäuses (5) und an der Schulter (69) der Isolationsmutter (6) abstützt.

22. Vorrichtung nach Anspruch 21, **dadurch gekennzeichnet**, daß die Druckfeder (110) Arretierungszapfen (111, 112) aufweist.

23. Vorrichtung nach Anspruch 22, **dadurch gekennzeichnet**, daß die Arretierungszapfen (111, 112) in Bohrungen (56) des Einschraubstückes (5) und (113) der Isolationsmutter (6) eingreifen.

24. Vorrichtung nach Anspruch 4, **dadurch gekennzeichnet**, daß die Isolationsmutter (6) gegen die torsionale und axiale Wirkung der Druckfeder (110) in ihrer Lage gehalten ist.

25. Vorrichtung nach Anspruch 1, **dadurch gekennzeichnet**, daß im Innenraum (91) eines Sondenkopfgehäuses (9) die elektronische Schaltung (10) der Meßsonde (1) angeordnet ist.

26. Vorrichtung nach Anspruch 1, **dadurch gekennzeichnet**, daß der Innenraum (54) des Gehäuses (5) mittels Wellendichtringen (92, 93) abgedichtet ist.

27. Vorrichtung nach Anspruch 1, **dadurch gekennzeichnet**, daß zwischen dem Gehäuse (5) und der Kegelverbindung (8) ein Zwischenstück (114) angeordnet ist.

28. Vorrichtung nach Anspruch 27, **dadurch gekennzeichnet**, daß die elektrische Verbindung der Schutzelektrode (4) mit der elektronischen Schaltung (10) mittels eines, im Inneren des Zwischenstückes (114) angeordneten Metallrohres (115) erfolgt.

29. Vorrichtung nach Anspruch 27, **dadurch gekennzeichnet**, daß eine Gewindemuffe (116) die Schutzelektrode (4) elektrisch leitend mit dem Metallrohr (115) verbindet.

30. Vorrichtung nach Anspruch 27, **dadurch gekennzeichnet**, daß zwischen dem elektrischen Verbindungsstab (11) und dem Metallrohr (115) sowie zwischen dem Metallrohr (115) und dem Zwischenstück (114) elektrisch isolierende Abstandsringe (117, 118) angeordnet sind.

31. Vorrichtung nach Anspruch 27, **dadurch gekennzeichnet**, daß die Kegelfläche (153) an der Konusaufnahme (119) angeformt ist.

32. Vorrichtung nach Anspruch 27, **dadurch gekennzeichnet**, daß die Befestigungselemente der Stabsonde (3) und der Schutzelektrode (4) im Inneren der Konusaufnahme (119) angeordnet sind.

## Claims

1. A structure for the electrically insulated and pressure-tight mounting of a metallic probe electrode (3, 4) in the opening (53, 153) of a housing (5), preferably in the opening (53, 153) of a housing (5) of a measuring probe (1) for measuring the liquid level in a container or in a channel, which opening expands toward the container side, said structure comprising the following features:
a) The structure is formed from a metallic bar electrode (3), a metallic protective electrode (4), and a housing (5);
b) at the bar electrode (3), the protective electrode (4), and the housing (5), cone-frustum-shaped sealing surfaces (35, 42, 47, 53) are disposed so as to form opposite sealing cone connections (7, 8) between the conical surfaces of the bar electrode (3) and the protective electrode (4) as well as between the conical surfaces of the protective electrode (4) and the housing (5);
c) the bar electrode (3) and the protective electrode (4) are insulated from each other (71, 72, 81) and, forming the sealing cone connections (7, 8), are held in place in the interior of the housing (5) against the action of a compression spring (110) by a nut (6) insulating the electrodes and the electrical connections (11,12) of the electrodes.

2. A structure as claimed in claim 1, characterized in that the protective electrode (4) coaxially surrounds the bar electrode (3), including an insulation (71, 72).

3. A structure as claimed in claim 1, characterized in that the cone connections (7, 8) pressure-seal the bar electrode (3) from the protective electrode (4), and the protective electrode (4) from the housing (5), including the insulating layer (71, 72, 81).

4. A structure as claimed in claim 1, characterized in that the bar electrode (3) and the insulating nut (6) form the bolted connection provided in the interior of the housing (5).

5. A structure as claimed in claim 1, characterized in that the housing (5) is a screw-in piece, with the aid of which the measuring probe (1) is mounted in the wall (2) surrounding the medium to be measured.

6. A structure as claimed in claim 1, characterized in that the bar electrode (3) is connected with a sealing cone (32) which surrounds the probe rod (31) and which is formed by two surfaces (43, 35) of a frustum of a cone which taper toward the ends of the sealing cone (32).

7. A structure as claimed in claim 6, characterized in that a step (36) is formed on the sealing cone (32).

8. A structure as claimed in claim 6, characterized in that the probe rod (31) and the sealing cone (32) are joined by welding.

9. A structure as claimed in claim 4, characterized in that the bar electrode (3) has, at its end remote from the interior of the container, a connecting and fastening bolt of smaller diameter (33) which is provided with an external thread (37).

10. A structure as claimed in claim 1, characterized in that sealing cones (42, 43) are formed at the protective electrode (4).

11. A structure as claimed in claim 10, characterized in that the sealing cone (42) expands in the direction of the interior of the container.

12. A structure as claimed in claim 10, characterized in that the sealing cone (43) surrounds the circumferential surface of the tubular portion (41) and is formed from two cone-frustum-shaped surfaces (46, 47) which taper toward the ends of the sealing cone (43).

13. A structure as claimed in claim 1, characterized in that the protective electrode (4) is provided, at its end facing toward the sealing cone (42), with two geometrically opposed recesses (44).

14. A structure as claimed in claim 13, characterized in that the segments not provided with the recesses (44) are semicircular and are provided with an external thread (45).

15. A structure as claimed in claim 1, characterized in that the insulating nut (6) is formed from the two functionally defined areas fastening nut (62, 67) and insulating flange (66, 67).

16. A structure as claimed in claim 15, characterized in that the flange (66) supports the electric conductors (11, 12) of the bar electrode (3) and the protective electrode (4) at the wall of the interior (54), insulating them with respect to the housing (5).

17. A structure as claimed in claim 15, characterized in that the insulating nut (6) has an axially arranged internal thread (63).

18. A structure as claimed in claim 15, characterized in that the insulating nut (6) is provided with openings (62, 64, 65) through which the electrical connections of the bar electrode (3) and the protective electrode (4) with the electronic circuit (10) are passed so as to be electrically insulated from each other.

19. A structure as claimed in claim 17, characterized in that the openings (64, 65) of the insulating nut (6) through which extend the ends of the protective electrode (4) remote from the interior of the container are semicircular in shape.

20. A structure as claimed in claim 15, characterized in that the insulating nut (6) is made of an electrically insulating material.

21. A structure as claimed in claim 1, characterized in that in the interior (54) of the housing (5), a compression spring (110) is supported by the shoulder (55) of the housing (5) and by the shoulder (69) of the insulating nut (6).

22. A structure as claimed in claim 1, characterized in that the compression spring (110) has locking pins (111, 112).

23. A structure as claimed in claim 22, characterized in that the locking pins (111, 112) enter holes (56) of the screw-in piece (5) and (113) of the insulating nut (6).

24. A structure as claimed in claim 4, characterized in that the insulating nut (6) is held in position against the torsional and axial action of the compression spring (110).

25. A structure as claimed in claim 1, characterized in that the interior (91) of a probe-head housing (9) contains the electronic circuit (10) of the measuring probe (1).

26. A structure as claimed in claim 1, characterized in that the interior (54) of the housing (5) is sealed by means of shaft seal rings (92, 93).

27. A structure as claimed in claim 1, characterized in that a connecting piece (114) is provided between the housing (5) and the cone connection (8).

28. A structure as claimed in claim 27, characterized in that the electrical connection of the protective electrode (4) with the electronic circuit (10) is provided by a metal tube (115) disposed in the interior of the connecting piece (114).

29. A structure as claimed in claim 27, characterized in that a threaded sleeve (116) electrically connects the protective electrode (4) with the metal tube (115).

30. A structure as claimed in claim 27, characterized in that electrically insulating spacing rings (117, 118) are provided between the electrical connecting bar (11) and the metal tube (115) as well as between the metal tube (115) and the connecting piece (114).

31. A structure as claimed in claim 27, characterized in that the conical surface (153) is formed on the cone receptacle (119).

32. A structure as claimed in claim 27, characterized in that the fastening elements of the rod probe (3) and of the protective electrode (4) are disposed in the interior of the cone receptacle (119).

## Revendications

1. Dispositif de fixation isolée électriquement et étanche à la pression d'une électrode de sonde (3,4) métallique dans l'ouverture (53, 153) d'un corps (5), de préférence dans l'ouverture (53, 153), s'élargissant vers le côté d'un réservoir, d'un corps (5) d'une sonde de mesure (1) servant à mesurer le niveau de remplissage dans un réservoir ou la hauteur de surface libre dans un chenal, comportant les caractéristiques suivantes :
a) le dispositif est constitué d'une électrode baguette (3) métallique, d'une électrode de protection (4) métallique et d'un corps (5) ;
b) sur l'électrode baguette (3), l'électrode de protection (4) et le corps sont prévues des surfaces d'étanchéité tronconiques (35, 42, 47, 53) disposées de façon telle qu'elles constituent des joints d'étanchéité coniques (7, 8) qui se font face entre les surfaces coniques de l'électrode baguette (3) et de l'électrode de protection (4), ainsi qu'entre les surfaces coniques de l'électrode de protection (4) et du corps (5) ;
c) l'électrode baguette (3) et l'électrode de protection (4) sont maintenues dans leur position à l'intérieur du corps (5) à l'encontre de l'action d'un ressort de compression (110) en étant isolées l'une de l'autre (71, 72, 81) et en formant les joints d'étanchéité coniques (7, 8) par un écrou (6) qui isole les électrodes (3, 4) ainsi que les connexions électriques (11, 12) des électrodes.

2. Dispositif selon la revendication 1, caractérisé en ce que l'électrode de protection (4) entoure coaxialement l'électrode baguette (3) avec interposition d'une isolation (71, 72).

3. Dispositif selon la revendication 1, caractérisé en ce que les joints coniques (7, 8) ferment de façon étanche à la pression l'intervalle entre l'électrode baguette (3) par rapport à l'électrode de protection (4) et entre l'électrode de protection (4) par rapport au corps (5) avec interposition de la couche isolante (71, 72, 81).

4. Dispositif selon la revendication 1, caractérisé en ce que l'électrode baguette (3) et l'écrou isolant (6) constituent le raccord vissé disposé à l'intérieur du corps (5).

5. Dispositif selon la revendication 1, caractérisé en ce que le corps (5) est une pièce vissée à l'aide de laquelle la sonde de mesure (1) est fixée dans la paroi (2) entourant le milieu à mesurer.

6. Dispositif selon la revendication 1, caractérisé en ce que l'électrode baguette (3) est reliée à un cône d'étanchéité (32) qui entoure la tige de sonde (31) et qui est formé par deux surfaces tronconiques (43, 35) s'amincissant vers les extrémités du cône d'étanchéité (32).

7. Dispositif selon la revendication 6, caractérisé en ce qu'un talon (36) est formé sur le cône d'étanchéité (32).

8. Dispositif selon la revendication 6, caractérisé en ce que la tige de sonde (31) et le cône d'étanchéité (32) sont reliés entre eux par un procédé de soudage.

9. Dispositif selon la revendication 4, caractérisé en ce que l'électrode baguette (3) présente, à son extrémité la plus éloignée de l'espace intérieur du réservoir, une cheville d'assemblage et de fixation d'un plus petit diamètre (33), sur laquelle est formé un filetage extérieur (37).

10. Dispositif selon la revendication 1, caractérisé en ce que des cônes d'étanchéité (42, 43) sont prévus le long de l'électrode de protection (4).

11. Dispositif selon la revendication 10, caractérisé en ce que le cône d'étanchéité (42) va en s'élargissant vers l'espace intérieur du réservoir.

12. Dispositif selon la revendication 10, caractérisé en ce que le cône d'étanchéité (43) entoure la surface latérale de la partie tubulaire (41) et que le cône d'étanchéité est formé par deux surfaces tronconiques (46, 47) s'amincissant vers les extrémités du cône d'étanchéité (43).

13. Dispositif selon la revendication 1, caractérisé en ce que l'électrode de protection (4), au niveau de son extrémité la plus éloignée du cône d'étanchéité (42), est traversée par deux encoches (44) géométriquement opposées.

14. Dispositif selon la revendication 13, caractérisé en ce que les segments non évidés par les encoches (44) sont demi-circulaires et sont pourvus d'un filetage extérieur (45).

15. Dispositif selon la revendication 1, caractérisé en ce que l'écrou isolant (6) est constitué par les deux zones fonctionnellement définies, à savoir l'écrou de fixation (62, 63) et la collerette isolante (66, 67).

16. Dispositif selon la revendication 15, caractérisé en ce que la collerette (66) s'appuie contre la paroi de l'espace intérieur (54) du corps, en isolant du corps (5) les conducteurs électriques (11, 12) de l'électrode baguette (3) et de l'électrode de protection (4).

17. Dispositif selon la revendication 15, caractérisé en ce que l'écrou isolant (6) présente un filetage intérieur (63) disposé axialement.

18. Dispositif selon la revendication 15, caractérisé en ce que l'écrou isolant (6) est traversé d'ouvertures (62, 64, 65), à travers lesquelles sont passées, isolées électriquement l'une de l'autre, les connexions électriques reliant l'électrode baguette (3) et l'électrode de protection (4) au circuit électronique (10).

19. Dispositif selon la revendication 17, caractérisé en ce que les encoches (64, 65) de l'écrou isolant (6), traversées par les extrémités de l'électrode de protection (4) les plus éloignées de l'espace intérieur du réservoir, sont demi-circulaires.

20. Dispositif selon la revendication 15, caractérisé en ce que l'écrou isolant (6) est fabriqué avec un matériau électriquement isolant.

21. Dispositif selon la revendication 1, caractérisé en ce que, dans l'espace intérieur (54) du corps (5), un ressort de compression (110) s'appuie contre l'épaulement (55) du corps (5) et contre l'épaulement (69) de l'écrou isolant (6).

22. Dispositif selon la revendication 21, caractérisé en ce que le ressort de compression (110) présente des ergots d'arrêt (111, 112).

23. Dispositif selon la revendication 22, caractérisé en ce que les ergots d'arrêt (111, 112) s'engagent dans des perçages (56) de la pièce vissée (5) et (113) de l'écrou isolant (6).

24. Dispositif selon la revendication 4, caractérisé en ce que l'écrou isolant (6) est maintenu dans sa position à l'encontre de l'action axiale et en torsion du ressort de compression (110).

25. Dispositif selon la revendication 1, caractérisé en ce que le circuit électronique (10) de la sonde de mesure (1) est disposé dans l'espace intérieur (91) d'un corps (9) de tête de sonde.

26. Dispositif selon la revendication 1, caractérisé en ce que l'espace intérieur (54) du corps (5) est rendu étanche au moyen de bagues à lèvres (92, 93).

27. Dispositif selon la revendication 1, caractérisé en ce qu'une pièce intermédiaire (114) est disposée entre le corps (5) et le joint conique (8).

28. Dispositif selon la revendication 27, caractérisé en ce que la connexion électrique reliant l'électrode de protection (4) au circuit électronique (10) est réalisée au moyen d'un tube métallique (115) disposé à l'intérieur de la pièce intermédiaire (114).

29. Dispositif selon la revendication 27, caractérisé en ce qu'un manchon fileté (116) relie l'électrode de protection (4) au tube métallique (115) par une liaison électriquement conductrice.

30. Dispositif selon la revendication 27, caractérisé en ce que des bagues d'écartement (117, 118) électriquement isolants sont disposées entre la tige de connexion électrique (11) et le tube métallique (115), ainsi qu'entre le tube métallique (115) et la pièce intermédiaire (114).

31. Dispositif selon la revendication 27, caractérisé en ce que la surface conique (153) est formée sur le support conique (119).

32. Dispositif selon la revendication 27, caractérisé en ce que les éléments de fixation de la sonde baguette (3) et de l'électrode de protection (4) sont disposés à l'intérieur du support conique (119).
